# EUROPEAN PATENT APPLICATION

(11) **EP 4 711 869 A1**
(43) Date of publication of application: **18.03.2026**
(21) Application number: 24807379.3
(22) Date of filing: 17.04.2024
(51) Int. Cl.: G05B 19/4069, G06N 5/04, G06N 3/08, G06N 20/00, G05B 19/418, B23Q 15/00

(54) **MULTI-TASK REAL-TIME INFERENCE SCHEDULING SYSTEM MACHINE TOOL AND METHOD THEREOF**

(30) Priority: 12.05.2023 KR 20230061881
(71) Applicant: DN Solutions Co., Ltd., Changwon-si, Gyeongsangnam-do 51537 (KR)
(72) Inventor: KIM, Donghyun, Seoul 04588 (KR)
(74) Representative: BCKIP Part mbB
(86) International application number: PCT/KR2024/005187
(87) International publication number: WO 2024/237500

(57) **Abstract**

The present invention relates to a multi-task real-time inference scheduling system and real-time inference scheduling method of a machine tool, wherein a central control unit is connected to each of one or more individual control units through a network, receives a use context of each machine tool through each individual control unit, generates a multi-task learning model through a neural network, infers multiple tasks required to be performed by the individual control unit of each machine tool through machine learning by using real-time use contexts collected during operation of the machine tool by a use scenario, and schedules the multiple tasks of the machine tool through machine learning.

## Description

### [FIELD OF THE DISCLOSURE]

The present invention relates to a multi-task real-time inference scheduling system and a real-time inference scheduling method of a machine tool, and more particularly, to a multi-task real-time inference scheduling system and a real-time inference scheduling method of a machine tool in which a central control unit is connected to each of one or more individual control units through a network, receives a use context of each machine tool through each individual control unit, generates a multi-task learning model through a neural network, infers multiple tasks, required to be performed by the individual control unit of each machine tool, through machine learning by using real-time use contexts collected during operation of the machine tool by a use scenario for each machine tool, and schedules the multiple tasks of the machine tool through machine learning.

### [BACKGROUND OF THE DISCLOSURE]

In general, a machine tool refers to a machine used to process metal/non-metal workpieces in a desired shape and dimension using a suitable tool by using various types of cutting or non-cutting methods.

Various types of machine tools including a turning center, a vertical/horizontal machining center, a door-type machining center, a Swiss turning machine, an electric discharge machine, a horizontal NC boring machine, a CNC lathe, and a multi-tasking machining center are being widely used in various industrial sites for the purpose of the corresponding work.

In addition, the machine tool is equipped with a table on which the workpiece material is seated and which transfers the workpiece for machining, a pallet for preparing the workpiece before machining, a main shaft to which a tool or workpiece is coupled and which rotates, a tailstock for supporting the workpiece during machining, a steady rest, and the like.

In general, the machine tool is provided with a transfer unit configured to transfer the table, a tool post, the main shaft, the tailstock, and the steady rest along a transfer shaft in order to perform various types of machining.

In addition, in general, the machine tool uses a plurality of tools in order to perform various types of machining, and a tool magazine or a turret is used in the form of a tool storage place for receiving and storing the plurality of tools.

The machine tool uses a plurality of tools in order to perform various types of machining, and the tool magazine is used in the form of the tool storage place for receiving and storing the plurality of tools.

In addition, in general, the machine tool is equipped with an automatic tool changer (ATC) configured to withdraw a specific tool from the tool magazine or remount the tool on the tool magazine based on an instruction of a numerical control unit in order to improve productivity of the machine tool.

In addition, in general, the machine tool is equipped with an automatic palette changer (APC) in order to minimize the non-processing time. The automatic palette changer (APC) automatically changes the palettes between a workpiece machining region and a workpiece loading region. The workpiece may be mounted on the palette.

Various types of machine tools currently in use are generally undergoing rapid advancement in numerical control (NC).

In recent years, machine tools to which computerized numerical control (CNC) technology is applied, which further advances the numerical control (NC) by automatically controlling machine tools using computers equipped with the numerical control (NC), tend to rapidly become widespread.

Numerically controlled (NC) or computer numerically controlled (CNC) machine tools are equipped with a control panel. Such a control panel includes various function switches or buttons and monitors.

As such, machine tools employing the numerical control or computer numerical control require that operators who create, manage, or work with machining programs generate NC codes for various control programs such as machining programs or individual control instructions of the machine tool and input the NC codes into the NC control unit of the machine tool to perform machining operations.

Unlike general purpose computers, numerous special-purpose home appliances or machine tools incorporate embedded systems or edge devices that perform designated tasks.

Recent machine tools are equipped with a numerical control system called Computer Numerical Control (CNC), and such a CNC system can variously control operations of machine tools in desired forms.

Today, control of an increasing number of machine tools is required to perform machining of diverse and complex shapes or to perform rapid and precise machining of workpieces for mass production.

However, unlike conventional multi-tasking by machine learning through general neural networks, machine tools present an imbalance problem in anomaly detection data, which limits the distribution of collected data and consequently may cause neural network overfitting issues.

In addition, the machine tools have difficulty obtaining uniformity and repeatability in data acquisition, resulting in problems with machine learning difficulties attributable to these characteristics. For example, even when the same equipment, materials, tools, machining programs, and machining conditions are set and data is acquired, the resulting data distribution may vary depending on the equipment installation, age, and precision.

Furthermore, regarding the heterogeneity of data distribution caused by equipment, even machine tool equipment of the same model may have partially different structures due to design updates reflected in each unit, which causes different equipment rigidity and may result in different sensor signal responsiveness even when the same cutting force under identical machining conditions is applied. In addition, in the case of equipment control parameters, depending on a user and primarily used machining operations, parameters such as acceleration/deceleration parameters affect dynamic behavior, through which feed axis rigidity may be set differently.

Moreover, conventional multi-tasks in machine tools proceeds without considering the dependencies between tasks for multiple operation processing, making it difficult to generate a multi-task learning model that matches the characteristics of the equipment, and even when generated, there is a problem of reduced reliability.

Moreover, as conventional machine tool multi-tasks are performed only with fixed operations without considering multi-tasking priorities or dependencies due to the constraints of limited resources of each machine tool's embedded system, this inability to generate optimal multi-task learning models according to the diversity and state of machine tools and perform optimal multi-tasking scheduling for the respective machine tools through inference described above results in limitations in fault diagnosis or monitoring of machine tools, decreased reliability and safety, operator inconvenience, and increased productivity and maintenance costs.

Accordingly, there is an urgent need to develop a multi-task real-time inference scheduling system and real-time inference scheduling method for machine tools that infers through machine learning the multi-tasks to be performed in each machine tool's individual control unit through real-time use context collected during operation according to use scenarios for each machine tool, and schedules the multi-tasking of the respective machine tool through machine learning.

### [Disclosure]

### [SUMMARY]

The present invention has been made in an effort to solve the above problem, and an object of the present invention is to provide a multi-task real-time inference scheduling system and a real-time inference scheduling method of a machine tool in which a central control unit is connected to each of one or more individual control units through a network, receives a use context of each machine tool through each individual control unit, generates a multi-task learning model through a neural network, infers multiple tasks, required to be performed by the individual control unit of each machine tool, through machine learning by using real-time use contexts collected during operation of the machine tool by a use scenario for each machine tool, and schedules the multiple tasks of the machine tool through machine learning.

### [Technical Solution]

In order to achieve the object of the present invention, a multi-task real-time inference scheduling system of a machine tool according to the present invention includes: individual control units controlling operation of respective machine tools; and a central control unit connected to one or more of the individual control units via a network, receiving a use context of each machine tool through each of the individual control units, and generating a multi-task learning model through a neural network, and the central control unit may infer multi-tasks, to be performed by the individual control unit of each machine tool, through machine learning based on a real-time use context collected during operation according to a use scenario for each machine tool, and schedule the multi-tasks of the respective machine tools through the machine learning.

Further, in another preferred embodiment of the multi-task real-time inference scheduling system of a machine tool according to the present invention, a use context for generating a multi-task learning model through the neural network of the multi-task real-time inference scheduling system of a machine tool and a real-time use context collected during operation according to a use scenario for each of the machine tools may include information related to use scenarios generated throughout an entire use cycle of each individual machine tool.

Further, in another preferred embodiment of the multi-task real-time inference scheduling system of a machine tool according to the present invention, the use context for generating the multi-task learning model through the neural network of the multi-task real-time inference scheduling system of a machine tool and the real-time use context collected during an operation by the use scenario for each of the machining tool may include any one or more information of machining material information, equipment information, tool information, NC information, machining information, process information, maintenance information, peripheral information, measurement information, geometric information, and technical information.

Further, in another preferred embodiment of the multi-task real-time inference scheduling system of a machine tool according to the present invention, the central control unit of the multi-task real-time inference scheduling system of a machine tool may include: a communication module communicating with each of the individual control units wiredly or remotely through the network; a database module storing the use context of each of the machine tools received from each of the individual control units through the communication module; a classification module classifying the use context of each of the machine tools, received from each of the individual control units stored in the database module, into common use contexts and individual use contexts according to a dependency relationship between the use contexts; a featuring module assigning featuring according to characteristics of the common use context and the individual use context of each of the machine tools classified by the classification module; and a generation module generating a common multi-task learning model and individual multi-task learning models through the machine learning based on the common use context and the individual use context of each of the machine tools that are featured through the featuring module.

Further, in another preferred embodiment of the multi-task real-time inference scheduling system of a machine tool according to the present invention, the classification module of the multi-task real-time inference scheduling system of a machine tool may perform classification of use contexts, collected from each of the machine tools, into common use contexts and individual use contexts through clustering and leveling for each similar machine tool use context by the machine learning.

Further, in another preferred embodiment of the multi-task real-time inference scheduling system of a machine tool according to the present invention, the featuring module of the multi-task real-time inference scheduling system of a machine tool may perform featuring step-by-step through a neural network configured for each layer.

Further, in another preferred embodiment of the multi-task real-time inference scheduling system of a machine tool according to the present invention, the generation module of the multi-task real-time inference scheduling system of a machine tool may generate a common multi-task learning model and individual multi-task learning models divided for each layer according to a dependency relationship between the common use context and the individual use contexts of each of the machine tools featured for each layer.

Further, in another preferred embodiment of the multi-task real-time inference scheduling system of a machine tool according to the present invention, the central control unit of the multi-task real-time inference scheduling system of a machine tool may further include: a verification module verifying whether each of the machine tools operates according to the use scenario for each of the machine tools; an aggregation module aggregating and storing, when each of the machine tools is operating according to a verification result by the verification module, a real-time use context of each machine tool operating according to a use scenario specific to the corresponding machine tool; a selection module selecting whether the real-time use context stored in the aggregation module is useful; an analysis module extracting useful real-time use contexts among the real-time use contexts according to a selection result of the selection module, classifying the extracted real-time use contexts into real-time common use contexts and real-time individual use contexts, and analyzing features of the corresponding use contexts; a determination module determining whether to proceed with common multi-tasking or individual multi-tasking based on a dependency relationship between the real-time common use context and the real-time individual use context, and features of the use contexts according to an analysis result of the analysis module; and an inference module automatically inferring in real time multi-tasks to be performed by individual control units of each of the machine tools currently operating under the corresponding use scenario through the machine learning using the common multi-task learning model and individual multi-task learning models generated by the generation module according to the determination result of the determination module.

Further, in another preferred embodiment of the multi-task real-time inference scheduling system of a machine tool according to the present invention, the central control unit of the multi-task real-time inference scheduling system of a machine tool may further include a scheduling module scheduling multi-tasks to be performed by the individual control units of each of the machine tools currently operating in the use scenario according to the inference result of the inference module.

Further, in another preferred embodiment of the multi-task real-time inference scheduling system of a machine tool according to the present invention, the scheduling module of the multi-task real-time inference scheduling system of a machine tool may reflect priority, real-time responsiveness, and/or periodicity, and derive scheduling to be performed in each of the machine tools in time series through the machine learning by the common multi-task learning model and the individual multi-task learning models generated by the generation module.

Further, in another preferred embodiment of the multi-task real-time inference scheduling system of a machine tool according to the present invention, the central control unit of the multi-task real-time inference scheduling system of a machine tool may further include a feedback module receiving a feedback for and storing information generated when performing multi-tasks in individual control units of each of the machine tools currently operating according to scheduling created by the scheduling module, and reflecting the feedback information to continuously modify, change, and upgrade the common multi-task learning model and individual multi-task learning models generated by the generation module through the machine learning.

Further, in another preferred embodiment of the multi-task real-time inference scheduling system of a machine tool according to the present invention, the central control unit of the multi-task real-time inference scheduling system of a machine tool may further include an output module converting data or results of the communication module, the database module, the classification module, the featuring module, the generation module, the verification module, the aggregation module, the selection module, the analysis module, the inference module, and the scheduling module into graphics, text, or images through a user graphic guidance program for display or transmission to the individual control unit.

Further, in another preferred embodiment of the multi-task real-time inference scheduling system of a machine tool according to the present invention, the individual control unit the multi-task real-time inference scheduling system of a machine tool may include: a memory unit storing information for controlling the operation of the machine tool for each machine tool; an operating unit operating the machine tool according to a use scenario using the information stored in the memory unit; a collection unit collecting real-time use contexts of the machine tool operated by the operating unit; and a transmitting and receiving unit transmitting the real-time use context collected by the collection unit or feedback information by scheduling to the central control unit, or receiving newly generated or modified multi-task inference results or multi-task scheduling from the central control unit.

Further, in another preferred embodiment of the multi-task real-time inference scheduling system of a machine tool according to the present invention, the individual control unit the multi-task real-time inference scheduling system of a machine tool may further include a display unit displaying data or results of the memory unit, the operating unit, the collection unit, and the transmitting and receiving unit.

In order to achieve another object of the present invention, a multi-task real-time inference scheduling method of a machine tool according to the present invention may include: connecting individual control units controlling operation of machine tools for each of the machine tools and a central control unit through a network wiredly or remotely; collecting and storing basic data and a use context of each of the machine tools received from each of the individual control units; classifying a common use context and individual use contexts according to a dependency relationship between the use contexts of the respective machine tools received from the respective individual control units; assigning featuring according to characteristics of the common use context and the individual use contexts classified into the common use context and the individual use contexts of the respective machine tools according to a classification result; generating, a common multi-task learning model and individual multi-task learning models divided for each layer according to a dependency relationship between the featured common use contexts and individual use contexts of each of the machine tools featured for each layer through machine learning based on the common use contexts and individual use contexts of each of the machine tools featured according to the featuring result.

Further, in another preferred embodiment of the multi-task real-time inference scheduling method of a machine tool according to the present invention, the multi-task real-time inference scheduling method of a machine tool may further include: after the generating, verifying whether each of the machine tools operates according to the use scenario for each of the machine tools; when each of the machine tools is operating according to a verification result, aggregating and storing a real-time use context of each machine tool operating according to a use scenario specific to the corresponding machine tool; selecting whether the aggregated and stored real-time use context is useful; extracting useful real-time use contexts among the real-time use contexts according to a selection result, classifying the extracted real-time use contexts into real-time common use contexts and real-time individual use contexts, and analyzing features of the corresponding use contexts; determining whether to proceed with common multi-tasking or individual multi-tasking based on a dependency relationship between the real-time common use context and the real-time individual use context, and features of the use contexts according to an analysis result; and automatically inferring in real time multi-tasks to be performed by individual control units of each of the machine tools currently operating under the corresponding use scenario through the machine learning using the common multi-task learning model and individual multi-task learning models previously generated according to the determination result.

Further, in another preferred embodiment of the multi-task real-time inference scheduling method of a machine tool according to the present invention, the multi-task real-time inference scheduling method of a machine tool may further include, after the inferring, scheduling multi-tasks to be performed by the individual control units of each of the machine tools which is being operated by use scenarios according to an inference result, which are to be performed in each of the machine tools in time series through the machine learning by the common multi-task learning model and the individual multi-task learning models generated by the generation module by reflecting priority, real-time responsiveness, and/or periodicity.

Further, in another preferred embodiment of the multi-task real-time inference scheduling method of a machine tool according to the present invention, the multi-task real-time inference scheduling method of a machine tool may further include, after the scheduling, receiving a feedback for and storing information generated when performing multi-tasks in individual control units of each of the machine tools currently operating according to the scheduling, and reflecting the feedback information to continuously modify, change, and upgrade the common multi-task learning model and individual multi-task learning models previously generated through the machine learning.

Further, in another preferred embodiment of the multi-task real-time inference scheduling method of a machine tool according to the present invention, the use context and the real-time use context of the multi-task real-time inference scheduling method of a machine tool may be any one or more information of machining material information, equipment information, tool information, NC information, machining information, process information, maintenance information, peripheral information, measurement information, geometric information, and technical information.

### [Advantageous Effects]

The multi-task real-time inference scheduling system and the real-time inference scheduling method of a machine tool according to the present invention have effects in which a central control unit is connected to each of one or more individual control units through a network, receives a use context of each machine tool through each individual control unit, and generates a multi-task learning model by considering a dependency relationship according to various environments and conditions through a neural network to improve the stability and reliability of the machine tool, and automatically and continuously generates and updates multi-task learning models regardless of the operator's skill level, experience, or knowledge to promote operator convenience and prevent safety accidents.

The multi-task real-time inference scheduling system and the real-time inference scheduling method of a machine tool according to the present invention have effects of inferring multi-tasks, to be performed by individual control units of respective machine tools, through machine learning using real-time use contexts collected during an operation according to use scenarios for each machine tool, and performing scheduling of multi-tasks for the respective machine tools through machine learning to schedule optimal multi-task performance for individual machine tools having respective limited embedded environments, thereby easily and quickly performing expansion and enhanced usability, promoting miniaturization of machine tools and reducing space utilization, and continuously making accurate and rapid judgments through updates according to new situations of individual machine tools where conditions, ratios, or environments have changed, not only for existing machine tools, thus reducing maintenance costs and time due to damage to or breakage of machine tools or workpieces, increasing consumer satisfaction, and improving exports.

Moreover, the multi-task real-time inference scheduling system and the real-time inference scheduling method of a machine tool according to the present invention have effects of improving machining precision and productivity by automatically reflecting optimal scheduling in individual machine tools to perform machining of workpieces, preventing generation of unnecessary defective products to conserve resources, and increasing convenience for users and operators.

### [Description of the Drawings]

FIG. 1 illustrates a conceptual diagram of a multi-task real-time inference scheduling system of a machine tool according to the present invention.
FIG. 2 illustrates a configuration diagram of an individual control unit of the multi-task real-time inference scheduling system of the machine tool according to the present invention.
FIG. 3 illustrates a configuration diagram of a central control unit of the multi-task real-time inference scheduling system of the machine tool according to the present invention.
FIG. 4 illustrates a configuration conceptual diagram for a use context in a multi-task real-time inference scheduling system and a real-time inference scheduling method of the machine tool according to an embodiment of the present invention.
FIG. 5 illustrates a configuration conceptual diagram for a tool holder spindle equipment context in a use context in a multi-task real-time inference scheduling system and a real-time inference scheduling method of a machine tool according to another embodiment of the present invention.
FIG. 6 illustrates a conceptual diagram for generating a multi-task learning method in the multi-task real-time inference scheduling system and the real-time inference scheduling method of the machine tool according to an embodiment of the present invention.
FIG. 7 illustrates a conceptual diagram for classification and featuring of a use context in the multi-task real-time inference scheduling system and the real-time inference scheduling method of the machine tool according to an embodiment of the present invention.
FIG. 8 illustrates a procedure diagram of the multi-task real-time inference scheduling method of the machine tool according to an embodiment of the present invention.
FIG. 9 illustrates a detailed procedure diagram for multi-tasking inference in the multi-task real-time inference scheduling method of the machine tool according to an embodiment of the present invention.
FIG. 10 illustrates a detailed procedure diagram for multi-tasking scheduling in the multi-task real-time inference scheduling method of the machine tool according to an embodiment of the present invention.

### [Detailed Description of Certain Inventive Embodiment]

Hereinafter, a multi-task real-time inference scheduling system and a real-time inference scheduling method of a machine tool according to embodiments of the present invention will be described in detail with reference to drawings. The following exemplary embodiments are provided as examples for fully transferring the spirit of the present invention to those skilled in the art. Therefore, the present invention is not limited to the exemplary embodiments described below and may be specified as other aspects. Further, in the drawings, a size and a thickness of the apparatus may be exaggerated for convenience. Like reference numerals indicate like constituent elements throughout the specification.

The present invention may have various modifications and various embodiments and specific embodiments will be illustrated in the drawings and described in detail in the detailed description. Effects and features of the present invention, and methods for accomplishing the same will be more clearly understood from embodiments described in detail below with reference to the accompanying drawings. However, the present invention is not limited to embodiments disclosed below but may be implemented in various forms. In the following embodiment, the terms such as first, second, etc., are not restrictive meanings but are used for distinguishing one component from other components. Further, a singular form may include a plural form if there is no clearly opposite meaning in the context. Further, the terms such as "include" or "have" mean that there is a feature or a component disclosed in the specification and a possibility that one or more other features or components will be added is not pre-excluded. In addition, in the drawing, for convenience of description, sizes of the components may be exaggerated or reduced. For example, each configuration illustrated in the drawings is arbitrarily shown for understanding and ease of description, but the present invention is not limited thereto.

Advantages and features of the present invention and methods of achieving the advantages and features will be clear with reference to exemplary embodiments described in detail below together with the accompanying drawings. However, the present invention is not limited to the exemplary embodiments disclosed herein but will be implemented in various forms. The exemplary embodiments of the present invention are provided so that the present invention is completely disclosed, and a person with ordinary skill in the art can fully understand the scope of the present invention. The present invention will be defined only by the scope of the appended claims. Like reference numerals indicate like constituent elements throughout the specification. In the drawings, sizes and relative sizes of layers and regions may be exaggerated for clarity of description.

The terms used in the present specification are for explaining the exemplary embodiments, not for limiting the present invention. Unless particularly stated otherwise in the present specification, a singular form also includes a plural form. The terms such as "comprise (include)" and/or "comprising (including)" used in the specification do not exclude presence or addition of one or more other constituent elements, steps, operations, and/or elements, in addition to the mentioned constituent elements, steps, operations, and/or elements.

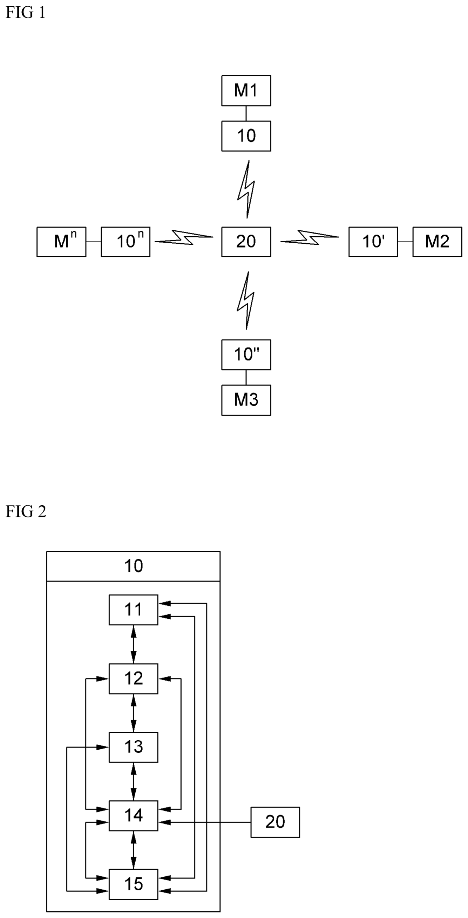

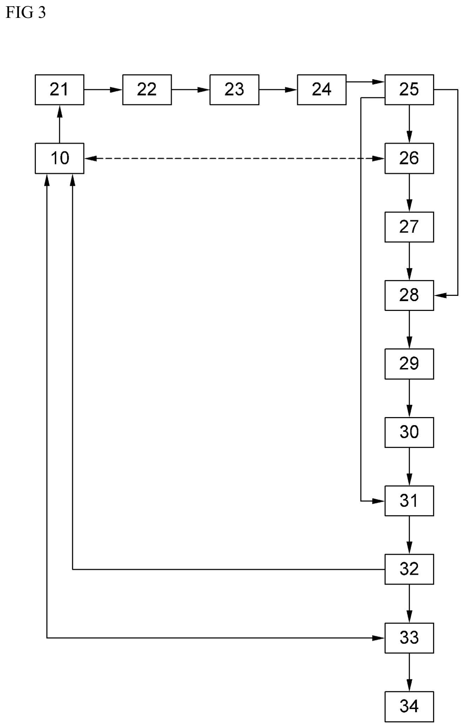

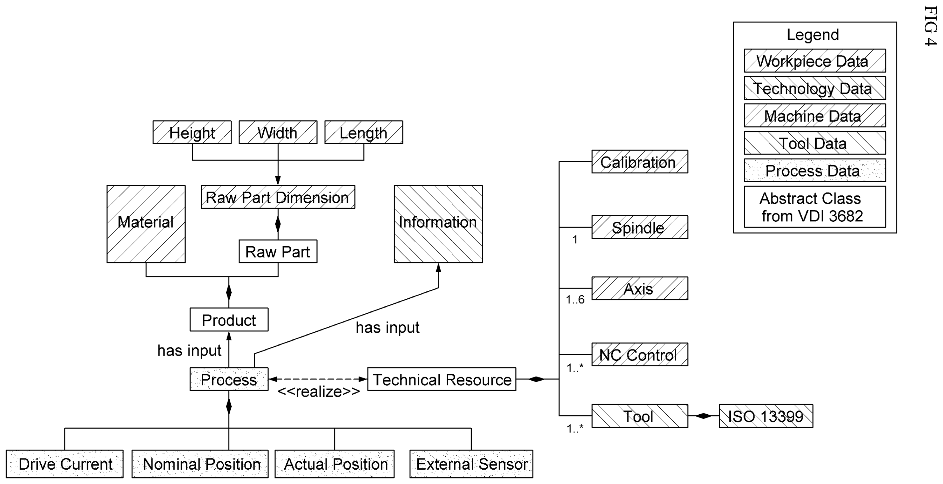

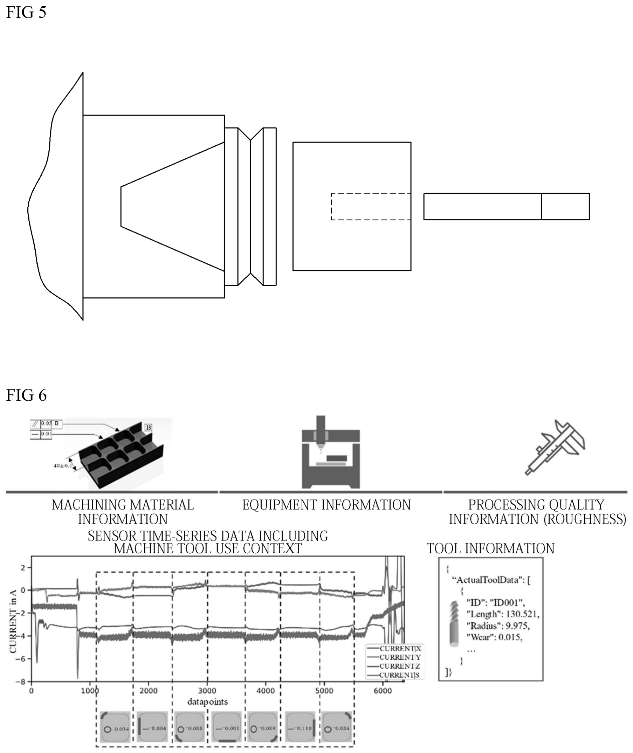

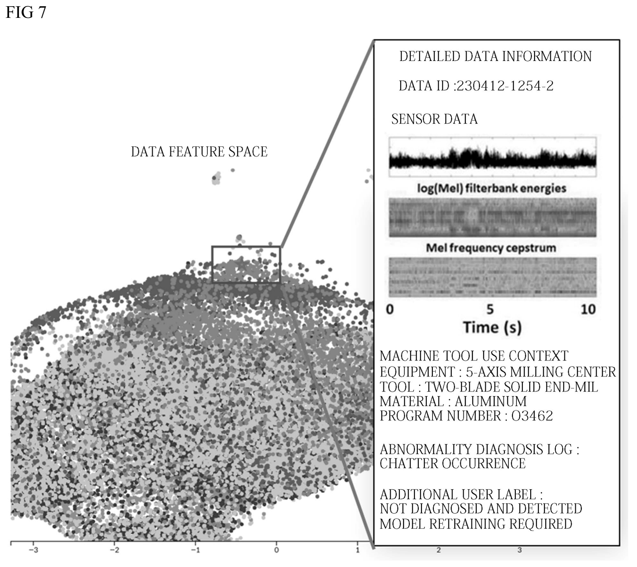

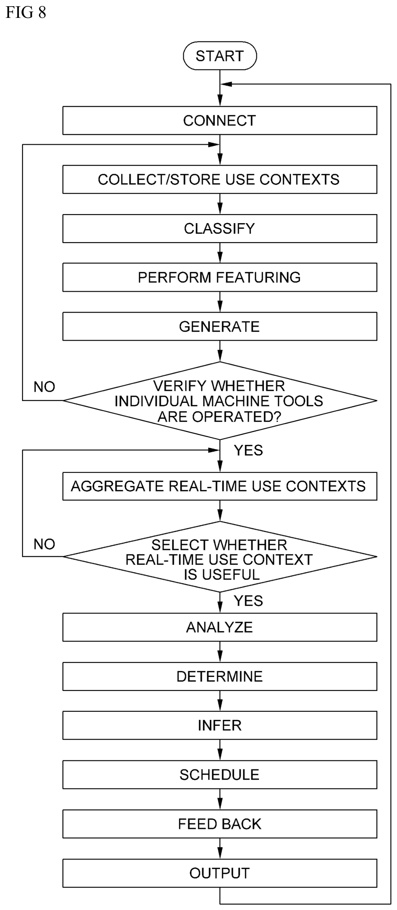

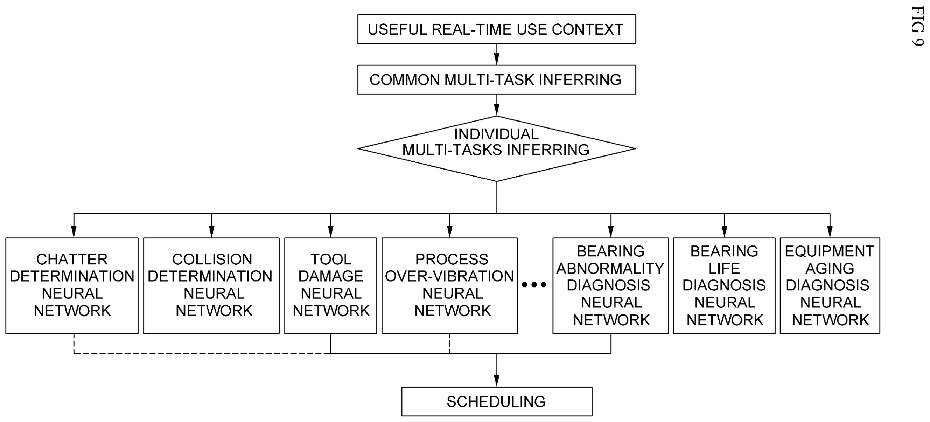

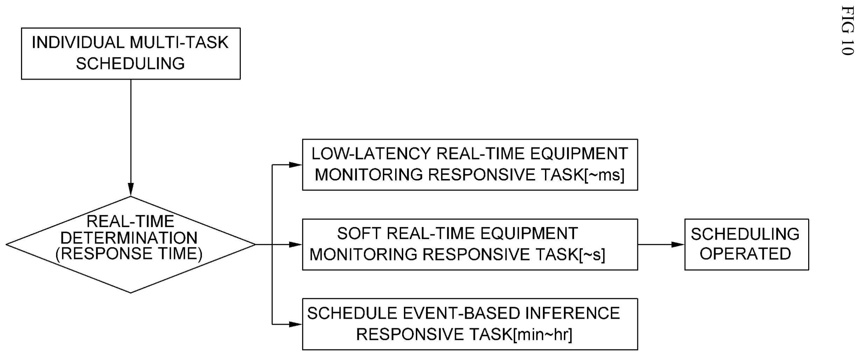

FIG. 1 illustrates a conceptual diagram of a multi-task real-time inference scheduling system of a machine tool according to the present invention. FIG. 2 illustrates a configuration diagram of an individual control unit of the multi-task real-time inference scheduling system of the machine tool according to the present invention. FIG. 3 illustrates a configuration diagram of a central control unit of the multi-task real-time inference scheduling system of the machine tool according to the present invention. FIG. 4 illustrates a configuration conceptual diagram for a use context in a multi-task real-time inference scheduling system and a real-time inference scheduling method of the machine tool according to an embodiment of the present invention. FIG. 5 illustrates a configuration conceptual diagram for a tool holder spindle equipment context in a use context in a multi-task real-time inference scheduling system and a multi-task real-time inference scheduling method of a machine tool according to another embodiment of the present invention. FIG. 6 illustrates a conceptual diagram for generating a multi-task learning method in the multi-task real-time inference scheduling system and the multi-task real-time inference scheduling method of the machine tool according to an embodiment of the present invention. FIG. 7 illustrates a conceptual diagram for classification and featuring of a use context in the multi-task real-time inference scheduling system and the multi-task real-time inference scheduling method of the machine tool according to an embodiment of the present invention. FIG. 8 illustrates a procedure diagram of the multi-task real-time inference scheduling method of the machine tool according to an embodiment of the present invention. FIG. 9 illustrates a detailed procedure diagram for multi-tasking inference in the multi-task real-time inference scheduling method of the machine tool according to an embodiment of the present invention. FIG. 10 illustrates a detailed procedure diagram for multi-tasking scheduling in the multi-task real-time inference scheduling method of the machine tool according to an embodiment of the present invention.

The multi-task real-time inference scheduling system and the multi-task real-time inference scheduling method of a machine tool according to the present invention will be described with reference to FIGS. 1 to 10.

As illustrated in FIGS. 1 to 7, the multi-task real-time inference scheduling system of the machine tool according to the present invention includes an individual control unit 10 and a central control unit 20.

The individual control unit 10 controls an operation of the machine tool for each machine tool.

The central control unit 20 is connected to one or more of the individual control units via a network, receives a use context of each machine tool through each of the individual control units, and generates a multi-task learning model through a neural network.

The central control unit infers multi-tasks to be performed by the individual control unit of each machine tool through machine learning based on a real-time use context collected during an operation according to a use scenario for each machine tool, and schedules the multi-tasks of the respective machine tools through the machine learning.

Accordingly, the stability and reliability of the machine tool are improved, and multi-task learning models are automatically and continuously generated and updated regardless of the operator's skill level, experience, or knowledge, thereby providing convenience to the operator and preventing safety accidents in advance.

As illustrated in FIG. 1, the central control unit 20 of the multi-task real-time inference scheduling system of the machine tool according to the present invention is respectively connected to one or more individual control units via the network, and if necessary, one or more individual control units may also be integrally connected through the network.

As illustrated in FIG. 2, the individual control unit 10 of the multi-task real-time inference scheduling system of the machine tool according to the present invention includes a memory unit 11, an operating unit 12, a collection unit 13, a transmitting and receiving unit 14, and a display unit 15. The individual control unit includes numerical control (NC) or computerized numerical control (CNC) and has various numerical control programs built therein.

In addition, although not illustrated in the drawings, according to a preferred embodiment of the present invention, the individual control unit includes a main operation unit, and such a main operation unit includes a screen display program and a data input program according to screen display selection, displays software switches on the display screen according to an output of the screen display program, and performs a function of issuing input/output commands for machine operation by recognizing the ON/OFF state of the software switches.

In addition, the present invention is not particularly limited thereto, but the main operation unit is installed on a housing, a case, or one side of the machine tool and includes a monitor capable of displaying various function switches or buttons and various information.

The memory unit 11 stores information for controlling the operation of the machine tool for each machine tool. The memory unit may be various storage devices including a ROM, a RAM, an EPROM, a flash drive, a hard drive, etc., or may also be a web storage that performs a storage function of the memory unit on the Internet.

The operating unit 12 operates the machine tool according to a use scenario through information stored in the memory unit.

The collection unit 13 collects a real-time use context of the machine tool operated by the operating unit. That is, the collection unit collects, as a real-time use context collected during an operation according to a use scenarios for each machine tool, any one or more of machining material information, equipment information, tool information, NC information, machining information, process information, maintenance information, peripheral information, measurement information, geometric information, and technical information.

The transmitting and receiving unit 14 transmits the real-time use context collected by the collection unit or feedback information by scheduling to the central control unit, or receives newly generated or modified multi-task inference results or multi-task scheduling from the central control unit.

The display unit 15 displays data or results of the memory unit, the operating unit, the collection unit, and the information transmitting and receiving unit. The display may include at least one of a liquid crystal display (LCD), a thin film transistor-liquid crystal display (TFT LCD), an organic light-emitting diode (OLED), a flexible display, a 3D display, and an electronic ink (e-ink) display.

In addition, the present invention is not particularly limited thereto, but the display unit is formed in the form of a touch screen, and is installed on the housing, the case, or one side of the machine tool to display various function switches or buttons and various information.

Further, the individual control unit may detect manipulation or input of control instructions by an administrator or user for individual operation control of the machine tool through the touch screen, a keypad, or a keyboard on the display unit, and manually input such instructions into a memory information collection unit of the individual control unit.

As illustrated in FIG. 3, the central control unit 20 of the multi-task real-time inference scheduling system of the machine tool according to the present invention includes a communication module 21, a database module 22, a classification module 23, a featuring module 24, a generation module 25, a verification module 26, an aggregation module 27, a selection module 28, an analysis module 29, a determination module 30, an inference module 31, a scheduling module 32, a feedback module 33, and an output module 34.

The communication module 21 communicates with each of the individual control units wiredly or remotely through the network. The network with the individual control unit of the communication module refers to a connection structure in which information may be exchanged between nodes such as the individual control unit and/or the central control unit, and an example of such a network includes a 3rd Generation Partnership Project (3GPP) network, a Long Term Evolution (LTE) network, a World Interoperability for Microwave Access (WIMAX) network, Internet, a Local Area Network (LAN), Wireless Local Area Network (LAN), a Wide Area Network (WAN), a Personal Area Network (PAN), a Bluetooth network, a satellite broadcasting network, an analog broadcasting network, a Digital Multimedia Broadcasting (DMB) network, etc., but is not limited thereto.

Furthermore, if necessary, the individual control unit 10 and the central control unit 20 may be connected via Ethernet or serial communication, but the connection is not limited thereto.

The database module 22 stores the use context of each of the machine tools received from each of the individual control units through the communication module. The database module may be various storage devices including a ROM, a RAM, an EPROM, a flash drive, a hard drive, etc., or may also be a web storage that performs a storage function of the database module on the Internet.

The classification module 30 classifies the use contexts of each of the machine tools received from each of the individual control units stored in the database module into common use contexts and individual use contexts according to a dependency relationship between the use contexts.

For example, the machine tool is equipped with various sensors such as acceleration sensors, current sensors, temperature sensors, and the like. The network must be designed to efficiently process and fuse data from the various sensors. In the case of analog sensors, the data is stored in the form of time-series waveforms.

Each sensor has different sampling rates and different significant frequency bands and resolutions. The time-series waveform data has statistically significant variables (mean, moving average, standard deviation, maximum value, minimum value, etc.).

Furthermore, features in a frequency domain are also low-level features commonly required for feature extraction of sensor data. Alternatively, preprocessed data obtained through a signal processing method such as a wavelet that simultaneously represents a time and a frequency are enabled to be utilized.

The classification module of the multi-task real-time inference scheduling system of the machine tool performs classification of use contexts, collected from each of the machine tools, into common use contexts and individual use contexts through clustering and leveling for each similar machine tool use context by the machine learning.

As illustrated in FIG. 4 and Table 1 below, the use context for generating a multi-task learning model through the neural network and the real-time use context collected during an operation according to the use scenarios for each of the machine tools may include information related to a use scenarios occurring throughout an entire use cycle of each individual machine tool.

Specifically, the use context for generating the multi-task learning model through the neural network and the real-time use context collected during an operation by the use scenario for each of the machining tool may include any one or more of machining material information, equipment information, tool information, NC information, machining information, process information, maintenance information, peripheral information, measurement information, geometric information, and technical information.

As illustrated in FIG. 5, the geometric information may include geometric information for tool holder combinations. Specifically, this enables defining the rigidity between the tool, the holder, and the spindle and conducting influence analysis thereof. Further, data influence according to manufacturing coupling forms between respective components may be verified.

The featuring module 24 assigns featuring according to characteristics of the common use context and the individual use context of each of the machine tools classified by the classification module.

This featuring module performs featuring step-by-step through a neural network configured for each layer. That is, as the featuring is performed step-by-step, it is possible to track features that occur at each step and observe the configuration and changes of feature values at low, intermediate, and high stages, thereby obtaining inference and learning rationale for each task.

For example, when accelerometer sensor data is represented as an image, low-level features will find basic and localized patterns. The intermediate-stage feature will combine the low-stage features to identify shapes or change patterns. Finally, at the high stage, features may be expressed as a human-understandable level feature, such as a harmonic frequency or a feature having a physical meaning.

As such, various meanings and inputs from sensors having different samplings may be received simultaneously, enabling debugging and fusion of features computed in the step-by-step neural network of each sensor to produce more diverse features compared to a case having a single modality.

Further, when the featuring module is performed step-by-step through the neural network configured for each layer, not all neural networks are activated, but rather data distribution is identified and only meaningful data is learned, or a task that needs to be inferred only during current use is selected and identified, thereby enabling resource-efficient operation.

The generation module 25 generates a common multi-task learning model and individual multi-task learning models through the machine learning based on the common use context and the individual use context of each of the machine tools that are featured through the featuring module.

For example, a learning strategy is selected by identifying data feature distribution in a real-time incoming data pipeline. The amount of data learning is controlled through selective learning of data and data learning cycles and strategies, thereby enabling efficient use of learning time and computing resources. Data used in the common multi-task learning model and data used in the individual multi-task learning models may have different feature spaces.

FIG. 6 is a photograph expressing an example of multi-channel sensor time-series data including materials, equipment, tools, machining results, shapes, and machining conditions in a machine tool use context. The time-series data may be edited for each interval according to various machine tool use contexts. Through this, similar machine tool use data sections can be clustered and data can be prepared for the common multi-task learning model and the individual multi-task learning models suitable for the clustering.

Various features are generated from the data, and the resulting features are arranged using correlation analysis and statistical techniques, and the distribution of each data in the feature space for the features is verified. Through this, the distribution and similarity of the data used to generate the common multi-task learning model and the individual multi-task learning models may be identified and learning data may be selected.

As illustrated in FIG. 7, the distribution of data having various machine tool use contexts may be verified. Through this, feature space distributions of legacy learned data and new data may be verified, and meaningful edge cases may be distinguished. Through this, the distribution of the data used for training of the common multi-task learning model and the individual multi-task learning model may be compared and analyzed to determine whether additional training is required. Further, appropriate data distribution may be verified for individual multi-task learning models to which additional algorithm development is applied, and learning data may be selected. In addition, customized data according to the machine tool use context may be fine-tuned and utilized for developing a learning model more suitable for the corresponding equipment.

The verification module 26 verifies whether each of the machine tools operates according to the use scenario for each of the machine tools.

When each of the machine tools is operating according to a verification result by the verification module, the aggregation module 27 aggregates and stores a real-time use context of each machine tool operating according to a use scenario specific to the corresponding machine tool.

The selection module 28 selects whether the real-time use context stored in the aggregation module is useful.

The analysis module 29 extracts useful real-time use contexts among the real-time use contexts according to a selection result of the selection module, classifies the extracted real-time use contexts into real-time common use contexts and real-time individual use contexts, and analyzes features of the corresponding use contexts.

The determination module 30 determines whether to proceed with common multi-tasking or individual multi-tasking based on a dependency relationship between the real-time common use context and the real-time individual use context, and features of the use contexts according to an analysis result of the analysis module.

The determination module 900 may be implemented using at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and electric units for performing other functions.

For example, individual multi-tasks must be designed for a specific task, such as event detection or semantic segmentation in machine tool processes. Tasks that may be applied to the machine tool largely include anomaly diagnosis detection, equipment control parameter optimization, service life diagnosis, etc. The anomaly diagnosis detection includes tasks requiring real-time control such as collision detection or tool breakage, and tasks without control elements such as chatter detection, tool unbalance detection, and excessive vibration detection. Tasks for the control parameter optimization considering the user's desired machining priority (machining accuracy, machining speed, and tool life priority) and tasks for the service life diagnosis include bearing life (spindle main shaft and feed axis), tool life, etc.

For example, the common multi-tasking is a context in which a network may learn common features across multiple tasks and improve the overall performance and efficiency of the network. The common use context is defined as a neural network that processes continuously occurring features from data of the analog sensor. The corresponding common neural network requires a neural network design that satisfies requirements defined for the task by utilizing a trade-off relationship between computational efficiency and throughput. The common neural network produces time-series frequency domain statistical mathematical features for calculating features output from analog sensors and mechanical elements, and features having a physical meaning generated from spindles and motor rotating bodies.

The inference module 31 automatically infers in real time multi-tasks to be performed by individual control units of each of the machine tools currently operating under the corresponding use scenario through the machine learning using the common multi-task learning model and individual multi-task learning models generated by the generation module according to the determination result of the determination module.

The scheduling module 32 schedules multi-tasks to be performed by the individual control units of each of the machine tools currently operating in the use scenario according to the inference result of the inference module.

Such a scheduling module reflects priority, real-time responsiveness, and/or periodicity, and derives scheduling to be performed in each of the machine tools in time series through the machine learning by the common multi-task learning model and the individual multi-task learning models generated by the generation module.

For example, for task responsiveness and time-deterministic tasks, highest-priority tasks must continue to operate at a regular cycle. For soft real-time tasks for monitoring, jitter in an execution cycle is allowed and the execution cycle is also relatively long. In addition, tasks that require high schedule-based accuracy collect data according to trigger events or predetermined schedules. In this case, other real-time tasks are not operated.

As illustrated in FIG. 9, identification of commonly required features through data including a machine tool use context is required. At this time, preliminary checks for operating the common multi-task learning model or individual multi-task learning models, such as whether a sensor being abnormal, are performed, and common features for operating the common multi-task learning model or individual multi-task learning models in time series and frequency domains must be created. Once this analysis is completed, inference and scheduling of the common multi-task learning model or individual multi-task learning models are performed. That is, by determining the trade-off relationship between accuracy and responsiveness, multi-tasks to be performed among the common multi-task learning model or individual multi-task learning model are inferred in real time according to machine tool use situations, and corresponding scheduling is derived.

As illustrated in FIG. 10, for example, one of the individual multi-task priorities that must be executed in machine tools rather than computing resources in individual multi-task scheduling is the real-time responsiveness of inference. This can be divided into low-latency deterministic inference tasks for control, soft real-time inference tasks for monitoring, and tasks for inferring and predicting current states according to predetermined schedules through data collection.

During low-latency deterministic inference and scheduling for equipment control, the required real-time responsiveness varies for each individual multi-task.

For example, chatter is a phenomenon that significantly affects machining quality due to self-excited vibrations caused by machining conditions and equipment rigidity. This phenomenon is typically detected within tens of milliseconds and requires fast response control such as RPM adjustment.

Furthermore, collision detection, for example, is a task that significantly affects the overall equipment service life and machining quality by disrupting spindle axis alignment due to collisions between equipment and tools. This task requires representative low-latency real-time response inference that must make determinations within several milliseconds and communicate with the equipment's digital I/O.

For example, in the case of tool breakage, tool failure during machining occurs not only as partial loss of cutting edges but also as complete tool destruction due to collisions caused by operator error. This imparts shock to the equipment causing permanent damage, which affects the structural rigidity and alignment of the equipment, thereby impacting machining quality.

For example, in the case of equipment over-vibration, low-frequency vibration of the equipment occurs due to various causes such as incorrect machining settings, machining conditions, tool setup, etc., which affects equipment performance. This impacts machining quality in specific paths and situations, and should be recorded as event logs for use in modifying machining conditions. This exhibits responsiveness sufficient for synchronizing event occurrence with positional data along the machining path.

For example, in the case of tool imbalance, this task detects alignment problems from the tool to the tool holder spindle clamping, causing unintended unbalanced rotation. This affects machining quality. This requires signal monitoring and enables post-machining assessment of machining quality due to such events.

For example, in the case of bearing life diagnosis, various machine tool use scenarios by different users result in different impacts on the life of the same equipment. This task comprises two components: a schedule-based task based on unprocessed air-cut operations to assess the condition, and a task to predict service life from the data obtained therefrom. In this task, accuracy is more important than responsiveness, and it is important to accurately collect and analyze meaningful data and periodically perform learning to improve the accuracy of the neural network.

The feedback module 33 receives and stores information generated when performing multi-tasks in individual control units of each of the machine tools currently operating according to scheduling created by the scheduling module, and reflects the feedback information to continuously modify, change, and upgrade the common multi-task learning model and individual multi-task learning models generated by the generation module through the machine learning.

The output module converts data or results of the communication module, the database module, the classification module, the featuring module, the generation module, the verification module, the aggregation module, the selection module, the analysis module, the inference module, and the scheduling module into graphics, text, or images through a user graphic guidance program for display or transmission to the individual control unit.

As described above, the multi-task real-time inference scheduling system of a machine tool according to the present invention has effects of inferring multi-tasks to be performed by individual control units of respective machine tools through machine learning using real-time use contexts collected during an operation according to use scenarios for each machine tool, and performing scheduling of multi-tasks for the respective machine tools through machine learning to schedule optimal multi-task performance for individual machine tools having respective limited embedded environments, thereby easily and quickly performing expansion and enhanced usability, promoting miniaturization of machine tools and reducing space utilization, and continuously making accurate and rapid judgments through updates according to new situations of individual machine tools where conditions, ratios, or environments have changed, not only for existing machine tools, thus reducing maintenance costs and time due to damage or breakage of machine tools or workpieces, increasing consumer satisfaction, and improving exports.

The multi-task real-time inference scheduling system of a machine tool according to the present invention will be described with reference to FIGS. 8 to 10. As illustrated in FIG. 8, the multi-task real-time inference scheduling method for a machine tool according to the present invention includes a connection step, a collection step, a classification step, a featuring step, a generation step, a verification step, an aggregation step, a selection step, an analysis step, a determination step, an inference step, a scheduling step, a feedback step, and an output step.

The specific operating process, operating principle, configuration, and content of the apparatus in each step are the same as those of the multi-task real-time inference scheduling system for a machine tool described in the specification of the present invention. Hereinafter, the distinctive features of the multi-task real-time inference scheduling method for a machine tool will be described with emphasis, with reference to FIGS. 8 to 10.

Individual control units controlling operation of machine tools for each of the machine tools and a central control unit are connected through a network wiredly or remotely.

After the connection step, basic data and a use context of each of the machine tools received from each of the individual control units are collected and stored.

After the collection step, the use contexts are classified into a common use context and individual use contexts according to a dependency relationship between the use contexts of the respective machine tools received from the respective individual control units.

The use context and the real-time use context may be any one or more of machining material information, equipment information, tool information, NC information, machining information, process information, maintenance information, peripheral information, measurement information, geometric information, and technical information.

After the classification step, featuring is assigned according to characteristics of the common use context and the individual use contexts classified into the common use context and the individual use contexts of the respective machine tools according to a classification result.

After the featuring step, based on the featured common use contexts and individual use contexts of each of the machine tools according to the featuring result, a common multi-task learning model and individual multi-task learning models are hierarchically divided and generated according to a dependency relationship between the featured common use contexts and individual use contexts of each of the machine tools through machine learning.

After the generation step, it is verified whether each of the machine tools operates according to the use scenario for each of the machine tools.

After the verification step, when each of the machine tools is operating according to a verification result, a real-time use context of each machine tool operating according to a use scenario specific to the corresponding machine tool is aggregated and stored.

After the aggregation step, it is selected whether the real-time use context stored in the aggregation module is useful.

After the selection step, useful real-time use contexts are extracted among the real-time use contexts according to a selection result, the extracted real-time use contexts is classified into real-time common use contexts and real-time individual use contexts, and features of the corresponding use contexts are analyzed.

After the analysis step, it is determined whether to proceed with common multi-tasking or individual multi-tasking based on a dependency relationship between the real-time common use context and the real-time individual use context, and features of the use contexts according to an analysis result.

After the determination step, multi-tasks are automatically inferred in real time, which are to be performed by individual control units of each of the machine tools currently operating under the corresponding use scenario through the machine learning supervised learning, unsupervised learning, and reinforcement learning by the common multi-task learning model and individual multi-task learning models generated by the generation module according to the determination result.

After the inferring step, multi-tasks are scheduled which are to be performed by the individual control units of each of the machine tools which is being operated by use scenarios according to an inference result which are to be performed in each of the machine tools in time series through the machine learning by the common multi-task learning model and the individual multi-task learning models generated by the generation module by reflecting priority, real-time responsiveness, and/or periodicity.

After the scheduling step, information generated when performing multi-tasks in individual control units of each of the machine tools currently operating according to the scheduling are fed back and stored, and the feedback information is reflected to continuously modify, change, and upgrade the common multi-task learning model and individual multi-task learning models previously generated through the machine learning.

As described above, the multi-task real-time inference scheduling system and the real-time inference scheduling method of a machine tool according to the present invention haves effects in which a central control unit is connected to each of one or more individual control units through a network, receives a use context of each machine tool through each individual control unit, and generates a multi-task learning model by considering a dependency relationship according to various environments and conditions through a neural network to improve the stability and reliability of the machine tool, and automatically and continuously generates and updates multi-task learning models regardless of the operator's skill level, experience, or knowledge to promote operator convenience and prevent safety accidents in advance.

Further, the multi-task real-time inference scheduling system and the real-time inference scheduling method of a machine tool according to the present invention haves effects of inferring multi-tasks to be performed by individual control units of respective machine tools through machine learning using real-time use contexts collected during an operation according to use scenarios for each machine tool, and performing scheduling of multi-tasks for the respective machine tools through machine learning to schedule optimal multi-task performance for individual machine tools having respective limited embedded environments, thereby easily and quickly performing expansion and enhanced usability, promoting miniaturization of machine tools and reducing space utilization, and continuously making accurate and rapid judgments through updates according to new situations of individual machine tools where conditions, ratios, or environments have changed, not only for existing machine tools, thus reducing maintenance costs and time due to damage or breakage of machine tools or workpieces, increasing consumer satisfaction, and improving exports.

Moreover, the multi-task real-time inference scheduling system and the real-time inference scheduling method of a machine tool according to the present invention have effects of improving machining precision and productivity by automatically reflecting optimal scheduling in individual machine tools to perform machining of workpieces, preventing generation of unnecessary defective products to conserve resources, and increasing convenience for users and operators.

Further, the operations according to the exemplary embodiments described above are implemented in a form of a program command which may be executed through various computer components means and may be recorded in the computer readable recording medium. The computer readable recording medium may include singly a program command, a data file, or a data structure or a combination thereof. The program instruction recorded in the computer readable recording medium may be specially designed and configured for the present invention, or may be publicly known to and used by those skilled in the computer software field. Examples of the computer readable recording media may include a hardware device particularly configured to store and execute program instructions, magnetic media such as hard disks, floppy disks, and magnetic tape, optical recording media such as CD-ROM disks and DVD, magneto-optical media such as floptical disks, ROM, RAM, and flash memories. Examples of the program instructions include a high-level language code executable by a computer by using an interpreter, and the like, as well as a machine language code created by a compiler. The hardware devices may be changed to one or more software modules in order to perform the processing according to the present invention, and an opposite situation thereof is available.

Specific executions described in the present invention are embodiments and the scope of the present invention is not limited even by any method. For brevity of the specification, descriptions of conventional electronic configurations, control systems, software, and other functional aspects of the systems may be omitted. Further, connection or connection members of lines among components exemplarily represent functions connections and/or physical or circuitry connections and may be represented as various functional connections, physical connections, or circuitry connections which are replaceable or added in an actual device. Further, unless otherwise specified, such as "essential", "important", etc., the connections may not be components particularly required for application of the present invention.

Further, while the present invention has been described above with reference to the exemplary embodiments of the present invention in the detailed description of the present invention, it may be understood, by those skilled in the art or those of ordinary skill in the art, that the present invention may be variously modified and changed without departing from the spirit and scope of the present invention disclosed in the claims. Accordingly, the technical scope of the present invention should not be limited to the contents disclosed in the detailed description of the specification but should be defined only by the claims.

### [Description of Main Reference Numerals of Drawings]

10 : Individual control unit
20 : Central control unit

## Claims

1. A multi-task real-time inference scheduling system of a machine tool, comprising:
individual control units controlling operation of respective machine tools; and
a central control unit connected to each of one or more of the individual control unit via a network, receiving a use context of each machine tool through each of the individual control units, and generating a multi-task learning model through a neural network,
wherein the central control unit infers multi-tasks, to be performed by the individual control unit of each machine tool, through machine learning based on a real-time use context collected during an operation according to a use scenario for each machine tool, and schedules the multi-tasks of the respective machine tools through the machine learning.

2. The multi-task real-time inference scheduling system of a machine tool of claim 1, wherein a use context for generating a multi-task learning model through the neural network and a real-time use context collected during an operation according to a use scenario for each of the machine tools include information related to a use scenarios occurring throughout an entire use cycle of each individual machine tool.

3. The multi-task real-time inference scheduling system of a machine tool of claim 1, wherein the use context for generating the multi-task learning model through the neural network and the real-time use context collected during an operation by the use scenario for each of the machining tool include any one or more of machining material information, equipment information, tool information, NC information, machining information, process information, maintenance information, peripheral information, measurement information, geometric information, and technical information.

4. The multi-task real-time inference scheduling system of a machine tool of claim 1 or 2, wherein the central control unit includes
a communication module communicating with each of the individual control units wiredly or remotely through the network;
a database module storing the use context of each of the machine tools received from each of the individual control units through the communication module;
a classification module classifying the use context of each of the machine tools, received from each of the individual control units stored in the database module, into common use contexts and individual use contexts according to a dependency relationship between the use contexts;
a featuring module assigning featuring according to characteristics of the common use context and the individual use context of each of the machine tools classified by the classification module; and
a generation module generating a common multi-task learning model and individual multi-task learning models through the machine learning based on the common use context and the individual use context of each of the machine tools that are featured through the featuring module.

5. The multi-task real-time inference scheduling system of a machine tool of claim 4, wherein the classification module performs classification of use contexts collected from each of the machine tools into common use contexts and individual use contexts through clustering and leveling for each similar machine tool use context by the machine learning.

6. The multi-task real-time inference scheduling system of a machine tool of claim 4, wherein the featuring module performs featuring step-by-step through a neural network configured for each layer.

7. The multi-task real-time inference scheduling system of a machine tool of claim 4, wherein the generation module generates a common multi-task learning model and individual multi-task learning models divided for each layer according to a dependency relationship between the common use context and the individual use contexts of each of the machine tools featured for each layer.

8. The multi-task real-time inference scheduling system of a machine tool of claim 7, wherein the central control unit further includes
a verification module verifying whether each of the machine tools operates according to the use scenario for each of the machine tools;
an aggregation module aggregating and storing, when each of the machine tools is operating according to a verification result by the verification module, a real-time use context of each machine tool operating according to a use scenario for each corresponding machine tool;
a selection module selecting whether the real-time use context stored in the aggregation module is useful;
an analysis module extracting useful real-time use contexts among the real-time use contexts according to a selection result of the selection module, classifying the extracted real-time use contexts into real-time common use contexts and real-time individual use contexts, and analyzing features of the corresponding use contexts;
a determination module determining whether to proceed with common multi-tasking or individual multi-tasking based on a dependency relationship between the real-time common use context and the real-time individual use context, and features of the use contexts according to an analysis result of the analysis module; and
an inference module automatically inferring in real time multi-tasks to be performed by individual control units of each of the machine tools currently operating under the corresponding use scenario through the machine learning using the common multi-task learning model and individual multi-task learning models generated by the generation module according to the determination result of the determination module.

9. The multi-task real-time inference scheduling system of a machine tool of claim 8, wherein the central control unit further includes
a scheduling module scheduling multi-tasks to be performed by the individual control units of each of the machine tools currently operating in the use scenario according to the inference result of the inference module.

10. The multi-task real-time inference scheduling system of a machine tool of claim 9, wherein the scheduling module reflects priority, real-time responsiveness, and/or periodicity, and derives scheduling to be performed in each of the machine tools in time series through the machine learning by the common multi-task learning model and the individual multi-task learning models generated by the generation module.

11. The multi-task real-time inference scheduling system of a machine tool of claim 9, wherein the central control unit further includes
a feedback module receiving a feedback for and storing information generated when performing multi-tasks in individual control units of each of the machine tools currently operating according to scheduling created by the scheduling module, and reflecting the feedback information to continuously modify, change, and upgrade the common multi-task learning model and individual multi-task learning models generated by the generation module through the machine learning.

12. The multi-task real-time inference scheduling system of a machine tool of claim 11, wherein the central control unit further includes
an output module converting data or results of the communication module, the database module, the classification module, the featuring module, the generation module, the verification module, the aggregation module, the selection module, the analysis module, the inference module, and the scheduling module into graphics, text, or images through a user graphic guidance program for display or transmission to the individual control unit.

13. The multi-task real-time inference scheduling system of a machine tool of claim 1, wherein the individual control unit includes
a memory unit storing information for controlling the operation of the machine tool for each machine tool;
an operating unit operating the machine tool according to a use scenario using the information stored in the memory unit;
a collection unit collecting real-time use contexts of the machine tool operated by the operating unit; and
a transmitting and receiving unit transmitting the real-time use context collected by the collection unit or feedback information by scheduling to the central control unit, or receiving newly generated or modified multi-task inference results or multi-task scheduling from the central control unit.

14. The multi-task real-time inference scheduling system of a machine tool of claim 13, wherein the individual control unit further includes
a display unit displaying data or results of the memory unit, the operating unit, the collection unit, and the transmitting and receiving unit.

15. A multi-task real-time inference scheduling method of a machine tool, comprising:
connecting individual control units controlling operation of machine tools for each of the machine tools and a central control unit through a network wiredly or remotely;
collecting and storing basic data and a use context of each of the machine tools received from each of the individual control units;
classifying a common use context and individual use contexts according to a dependency relationship between the use contexts of the respective machine tools received from the respective individual control units;
assigning featuring according to characteristics of the common use context and the individual use contexts classified into the common use context and the individual use contexts of the respective machine tools according to a classification result;
generating, a common multi-task learning model and individual multi-task learning models divided for each layer according to a dependency relationship between the featured common use contexts and individual use contexts of each of the machine tools featured for each layer through machine learning based on the common use contexts and individual use contexts of each of the machine tools featured according to the featuring result.

16. The multi-task real-time inference scheduling method of a machine tool of claim 15, further comprising:
after the generating,
verifying whether each of the machine tools operates according to the use scenario for each of the machine tools;
when each of the machine tools is operating according to a verification result, aggregating and storing a real-time use context of each machine tool operating according to a use scenario specific to the corresponding machine tool;
selecting whether the aggregated and stored real-time use context is useful;
extracting useful real-time use contexts among the real-time use contexts according to a selection result, classifying the extracted real-time use contexts into real-time common use contexts and real-time individual use contexts, and analyzing features of the corresponding use contexts;
determining whether to proceed with common multi-tasking or individual multi-tasking based on a dependency relationship between the real-time common use context and the real-time individual use context, and features of the use contexts according to an analysis result; and
automatically inferring in real time multi-tasks to be performed by individual control units of each of the machine tools currently operating under the corresponding use scenario through the machine learning using the common multi-task learning model and individual multi-task learning models previously generated according to the determination result.

17. The multi-task real-time inference scheduling method of a machine tool of claim 16, further comprising:
after the inferring,
scheduling multi-tasks to be performed by the individual control units of each of the machine tools which is being operated by use scenarios according to an inference result, which are to be performed in each of the machine tools in time series through the machine learning by the common multi-task learning model and the individual multi-task learning models generated by the generation module by reflecting priority, real-time responsiveness, and/or periodicity.

18. The multi-task real-time inference scheduling method of a machine tool of claim 17, comprising:
after the scheduling,
receiving a feedback for and storing information generated when performing multi-tasks in individual control units of each of the machine tools currently operating according to the scheduling, and reflecting the feedback information to continuously modify, change, and upgrade the common multi-task learning model and individual multi-task learning models previously generated through the machine learning.

19. The multi-task real-time inference scheduling method of a machine tool of claim 18, wherein the use context and the real-time use context are any one or more information of machining material information, equipment information, tool information, NC information, machining information, process information, maintenance information, peripheral information, measurement information, geometric information, and technical information.
